# EUROPÄISCHE PATENTSCHRIFT

(11) **EP 3 298 391 B1**
(45) Veröffentlichungstag und Bekanntmachung des Hinweises auf die Patenterteilung: **04.03.2026**
(21) Anmeldenummer: 16727138.6
(22) Anmeldetag: 13.05.2016
(51) Int. Cl.: G01N 21/90, B07C 5/12, G06T 7/00

(54) **PRÜFVERFAHREN UND PRÜFSYSTEM**
TESTING METHOD AND TESTING SYSTEM
PROCÉDÉ DE CONTRÔLE ET SYSTÈME DE CONTRÔLE

(30) Priorität: 18.05.2015 CH 6852015
(43) Veröffentlichungstag der Anmeldung: 28.03.2018
(73) Patentinhaber: Finatec Holding AG, 2555 Brügg bei Biel (CH)
(72) Erfinder: MAIBACH, Fridolin, 2553 Safnern (CH); HERMLE, Matthias, 2555 Brügg b. Biel (CH)
(74) Vertreter: BOVARD AG
(86) Internationale Anmeldenummer: PCT/EP2016/060904
(87) Internationale Veröffentlichungsnummer: WO 2016/184816

(56) Entgegenhaltungen:
- EP-A1- 1 479 454
- WO-A1-2015/014488
- CH-A1- 707 705
- CH-A2- 707 559
- US-A- 5 898 169
- US-A1- 2005 041 848
- US-A1- 2015 049 182

## Beschreibung

### Sachgebiet der Erfindung

Die vorliegende Erfindung bezieht sich auf ein Prüfverfahren und ein entsprechendes Prüfsystem. Spezifisch bezieht sich die vorliegende Erfindung auf ein Prüfverfahren und ein entsprechendes Prüfsystem, welche sich besonders eignen, die Eigenschaften der im Zusammenhang mit der Herstellung von Getränkeflaschen und anderen ähnlichen Behältern benötigten Werkstücke zu überprüfen. Beispiele für solche Gegenstände umfassen die so genannten "Pre-forms", also Preformen oder Rohlinge, aus welchen in einem gesonderten Arbeitsprozess Getränkeflaschen hergestellt werden, aber auch Verschlüsse für die Getränkeflaschen und alle Gegenstände, welche im Verfahren der Herstellung von Getränkeflaschen benötigt werden. Die vorliegende Erfindung bezieht sich spezifisch auf ein Verfahren und ein entsprechendes System zur Prüfung der Preforms, in welchem während des Transports der Preforms jeweils eine Abbildung davon mittels einer Aufnahmeeinrichtung gemacht und durch eine Prüfungseinrichtung geprüft wird.

Der Vollständigkeit halber soll an dieser Stelle angemerkt werden, dass unter dem Begriff "Preform", welcher nachfolgend verwendet wird, im Prin-zip alle Gegenstände verstanden werden, welche zur Herstellung von Getränkeflaschen und ähnlichen Behältern verwendet werden, sowie alle anderen ähnlichen Gegenstände, welche in Bezug auf das Produktionsverfahren bzw. von der Stuktur und/oder vom Aussehen her den herkömmlichen Preforms ähnlich sind. Beispiele solcher Gegenstände sind beispielsweise Spritzen (für die Verwendung im medizinischen oder Laborbereich), Reagenzgläser, Küvetten, usw.

### Stand der Technik

Bei der Herstellung von Behältern, insbesondere von Getränkeflaschen, werden im allgemeinen zunächst die so genannten Preforms, d.h. Vorformlinge oder Rohlinge, hergestellt und diese Preforms anschliessend zu den fertigen Behältern weiter verarbeitet. Diese Preforms werden typischerweise aus Kunststoff, vor allem aus PET (Polyethylenterephthalat), fabriziert. Andere, ähnliche Gegenstände, wie die oben beschriebenen Spritzen, Reagenzgläser, Küvetten, etc. aber auch Kunststoff-Deckel (Verschlüsse) für Getränkeflaschen u.ä. werden auf ähnliche Art und Weise hergestellt.

Weil Herstellungsvorgänge energieintensiv sind und weil die Herstellungsverfahren beim Entdecken nicht fehlerfreier Preforms in der Regel stillgesetzt werden müssen (wodurch höhere Kosten entstehen), werden hergestellte Preforms sowie andere erwähnte Preform-ähnliche Gegenstände in der Regel auf Vorhandensein von Fehlern geprüft, bevor sie in die Weiterverarbeitung geschickt werden. Mögliche Fehler in den hergestellten Preforms sind vor allem ungenaue Dimensionen, ungenaue Form, zu dünne oder zu dicke Wandstellen, Nadellöcher, Verbrennungen, Anwesenheit von Fremdkörpern und/oder Bläschen oder die fehlerhafte Farbbeschaffenheit.

Zudem weisen gewisse Preforms aber auch die Verschlüsse die so genannte Barriereschicht auf. In der Tat sind die Materialien, aus welchen Preforms hergestellt werden, meistens nicht vollkommen dicht. Mit anderen Worten können mit der Zeit Inhaltsstoffe aus den Behältern entweichen, was zu einer Denaturierung des Inhalts führen kann. Beispielsweise enweicht das Gas aus kohlensäurehaltigen Getränken durch die Wände der PET-Flasche oder durch die Kontaktstelle zwischen der Flasche und dem Verschluss, was mit der Zeit einen schalen Geschmack des Getränks verursacht. Barriereschichten werden deshalb aufgetragen, um dieses Problem zu lösen, und die in einem Behälter eingeschlossenen Inhaltsstoffe am Entweichen zu hindern. Ausserdem werden Barriereschichten auch umgekehrt verwendet, falls Stoffe daran gehindert werden sollen, in das Innere des Behälters einzudringen. Beispielsweise kann eine sauerstoffundurchlässige Barriereschicht verwendet werden, um empfindliche Produkte im Inneren des Behälters von einer Oxydation zu bewahren. Auch in dieser Art von Barriereschichten können Defekte auftauchen, welche möglichs zuverlässig detektiert werden sollen.

Nicht zuletzt besteht bei vielen Anwendungen auch das Bedürfnis, die Anzahl der zu prüfenden bzw. der geprüften (und darunter auch die Anzahl der fehlerhaften bzw. der korrekten) Gegenstände akkurat zu bestimmen. Da das manuelle Zählen einen grossen Aufwand erfordert, werden auch hierzu automatisierte Zählverfahren verwendet, dank welchen die Anzahl der gewünschten Werkstücke genau bestimmt werden kann.

Verschiedene Systeme und Verfahren zur Prüfung von Preforms und anderen ähnlichen Gegenständen auf solche Defekte sind bekannt. Dabei hat sich insbesondere die Prüfung mit Hilfe von digitalen Aufnahmeeinrichtungen durchgesetzt. Dabei werden entweder Preforms vor einer Aufnahmeeinrichtung vorbeibewegt, so dass jeweils ein oder mehrere Abbilder von jeder Preform gemacht werden können. Alternativ können die zu prüfenden Preforms jeweils statisch sein, während sich die Aufnahmeeinrichtung bewegt. In beiden Fällen vergleicht eine elektronische Verarbeitungseinrichtung die gemachten Abbilder mit einem Bezugsbild und stellt fest, ob das jeweilige Preform fehlerfrei ist, oder ob es gewisse Defekte aufweist. Nicht konforme Vergleichswerte führen zur Eliminierung des betreffenden Rohlings. Im gleichen Zuge kann auch die Zählung der Gegenstände durchgeführt werden.

Bei Barriereschicht führt eine reine optische Prüfung zu keinem befriedigenden Resultat, da diese Schicht meistens durchsichtig ist, so dass sie unter Tageslicht nicht oder nicht gut sichtbar ist. Auch die Barierreschichten in den Flaschenverschlüssen müssen auf eine besondere Art geprüft werden, da sie oft durch das Material des Verschlusses für eine konventionelle optische Prüfung nicht zugänglich sind. Zur Prüfung von Barriereschichten werden deshalb beispielsweise Infrarotkameras verwendet, mit welchen auch die Defekte in durchsichtigen bzw. optisch abgedeckten Schichten detektiert werden können.

Die meisten bisher bekannten Systeme bzw. Verfahren basieren jedoch im Wesentlichen auf einer Ordnung und Ausrichtung der zu prüfenden Gegenstände, da ein Abbild von jedem Gegenstand in einer gewünschten Position gemacht werden soll. Zudem bestehen aber auch Systeme bzw. Verfahren, bei welchen die zu prüfenden Gegenstände nicht geordnet geprüft werden können. Solche Systeme bzw. Verfahren, wie zum Beispiel aus dem Dokument CH 707 559 A2 bekannt, sind aber bisher nur für die Kontrolle der Farbbeschaffenheit bekannt.

### Zusammenfassung der Erfindung

Es ist daher eine Aufgabe der Erfindung, ein Prüfverfahren sowie ein zur Durchführung dieses Prüfverfahrens geeignetes Prüfsystem vorzuschlagen, bei welchen die oben beschriebenen Nachteile der bekannten Verfahren und Systeme vollständig überwunden oder mindestens stark vermindert sind.

Insbesondere ist eine Aufgabe der Erfindung, ein Prüfverfahren und das entsprechende Prüfsystem vorzuschlagen, dank welchen eine zuverlässige, schnelle und sehr einfache automatische Prüfung der Qualität einer ganzen Serie und die Zählung der Anzahl von Werkstücken mit einem wenig Platz in Anspruch nehmenden System gewährleistet sind. Ausserdem sollte die Installation dieses Systems an den bestehenden Herstellungsmaschinen auch sehr einfach durchgeführt werden können.

Gemäss der vorliegenden Erfindung werden diese Ziele insbesondere durch die Elemente der beiden unabhängigen Ansprüche erreicht. Weitere vorteilhafte Ausführungsformen gehen zudem aus den abhängigen Ansprüchen und der Beschreibung hervor.

Insbesondere werden diese Ziele der Erfindung dadurch erreicht, dass im Verfahren zur Prüfung der Werkstücke, welche aus einem Grundkörper bestehen, auf welchem optional eine Barriereschicht mindestens teilweise aufgetragen ist und zur Herstellung von Behältern, insbesondere Getränkeflaschen, vorgesehen sind, wobei die Werkstücke durch eine Transporteinrichtung in ein Aufnahmegefäss transportiert werden, und wobei mittels einer Aufnahmeeinrichtung eine Abbildung von den Werkstücken gemacht und an eine Verarbeitungseinrichtung zur Prüfung übermittelt wird, wobei die Abbildung zwischen dem Verlassen der Transporteinrichtung und Einführen in das Aufnahmegefäss gemacht wird, wobei die Abbildung ein optisches Kohärenztomogramm oder ein multispektrales Bild ist, und wobei die Abbildung durch die Verarbeitungseinrichtung derart verarbeitet wird, dass die Beschaffenheit des Grundkörpers und die Beschaffenheit der optional auf dem Grundkörper mindestens teilweise aufgetragenen Barriereschicht überprüft werden, um die fehlerhaften Werkstücke zu entdecken, wobei die Beschaffenheit des Grundkörpers dessen Dimension, Form, Wanddicke und/oder Länge eines Anspritzpunkts umfasst und die Beschaffenheit der Barriereschicht die Dicke der Barriereschicht umfasst.

An dieser Stelle soll noch angemerkt werden, dass es auch duchaus Werkstücke geben kann, welche keine Barriereschicht aufweisen. Zudem kann die Barriereschicht, falls sie vorhanden ist, entweder auf der Aussenseite (d.h. der gegen aussen gerichteten Oberfläche) oder auf der Innenseite (d.h. der gegen innen gerichteten Oberfläche) des Grundkörpers des Werkstücks liegen. Schliesslich ist es auch denkbar, dass sich die Barriereschicht zwischen zwei Trägerschichten des Grundkörpers (d.h. weder aussen noch innen) befindet.

Der Vorteil dieser Erfindung liegt insbesondere darin, dass fehlerhafte Werkstücke, namentlich Preforms oder Verschlüsse, aber auch andere ähnliche Gegenstände, und zwar in Bezug auf eine ganze Reihe von Defekten, inklusive Defekte in der Barriereschicht, ganz einfach entdeckt werden können, insbesondere auch ohne dass sie speziell ausgerichtet werden müssten. Zudem braucht es kaum Anpassung der bestehenden Herstellungsanlagen.

An dieser Stelle soll allerdings noch erwähnt werden, dass sich die vorliegende Erfindung neben dem oben beschriebenen erfindungsgemässen Prüfverfahren auch auf ein entsprechendes Prüfsystem nach dem unabhängigen Vorrichtungsanspruch bezieht.

Die Erfindung wird an Hand mehrerer Ausführungsformen dargestellt. Die einzelnen technischen Merkmale einer Ausführungsform kann durchaus auch in Kombination mit einer anderen Ausführungsform mit den dargelegten Vorteilen verwendet werden. Die Beschreibung der erfindungsgemässen technischen Merkmale sind daher nicht auf die jeweilige Ausführungsform beschränkt.

### Kurze Beschreibung der Zeichnungen

Nachfolgend werden Ausführungsformen der vorliegenden Erfindung anhand von Beispielen beschreiben. Die Beispiele der Ausführungen werden durch folgende beigelegten Figuren illustriert:
Figur 1 zeigt schematisch eine Seitenansicht eines Prüfsystems gemäss einer ersten Ausführungsform der vorliegenden Erfindung.
Figur 2 zeigt das in Figur 1 illustrierte Prüfsystem in einer perspektivischen Ansicht von vorne.
Figur 3 zeigt schematisch eine Seitenansicht eines Prüfsystems gemäss einer zweiten Ausführungsform der vorliegenden Erfindung.
Figur 4 zeigt das in Figur 2 illustrierte Prüfsystem in einer perspektivischen Ansicht von vorne.
Figur 5a und 5b zeigen schematisch eine Darstellung einer möglichen Abbildung, welche anlässlich der Prüfung von Preforms durch eine Aufnahmeeinrichtung im Prüfsystem aus Figur 1 bzw. Figur 3 gemacht und durch eine Verarbeitungseinheit ausgewertet wird.
Figur 6 zeigt schematisch eine perspektivische Ansicht von vorne auf ein Prüfsystem gemäss einer weiteren Variante der zweiten Ausführungsform der vorliegenden Erfindung.
Figur 7 zeigt schematisch eine Darstellung einer möglichen Abbildung, welche anlässlich der Prüfung von Preforms durch eine Aufnahmeeinrichtung im Prüfsystem aus Figur 6 gemacht und durch eine Verarbeitungseinheit ausgewertet wird.
Figur 8 zeigt schematisch eine perspektivische Ansicht von vorne auf ein Prüfsystem gemäss noch einer weiteren Variante der zweiten Ausführungsform der vorliegenden Erfindung.
Figur 9 zeigt schematisch eine Darstellung einer möglichen Abbildung, welche anlässlich der Prüfung von Preforms durch eine Aufnahmeeinrichtung im Prüfsystem aus Figur 8 gemacht und durch eine Verarbeitungseinheit ausgewertet wird.

### Detaillierte Beschreibung der Ausführungsformen

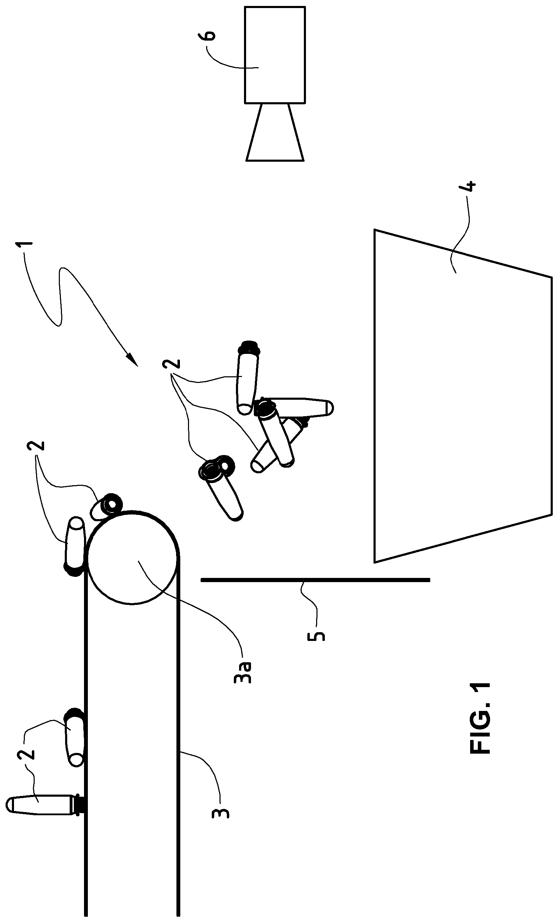

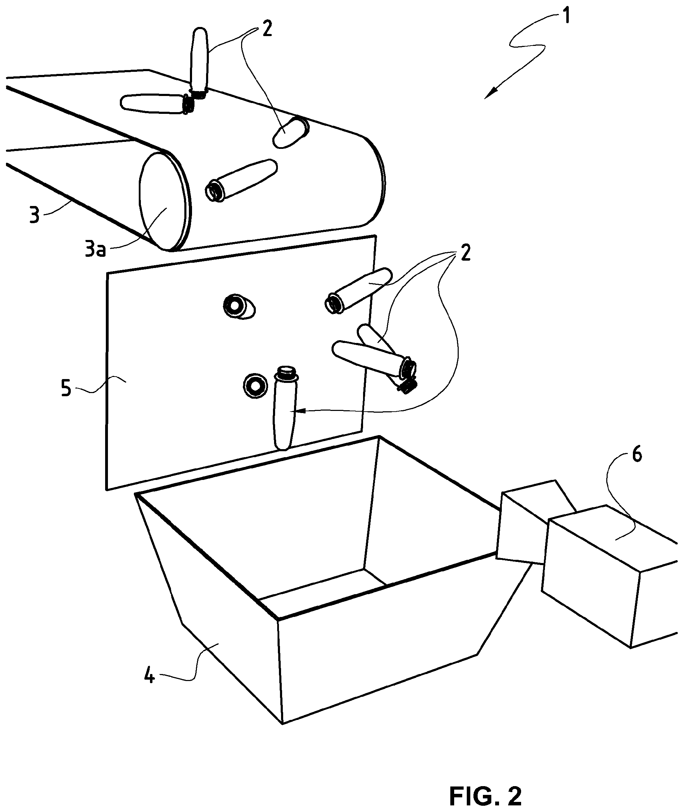

In Figur 1 und Figur 2 wird schematisch eine erste Ausführungsform eines Prüfsystems 1 gemäss einer ersten Ausführungsform der vorliegenden Erfindung illustriert. Wie bisher schon mehrmals erwähnt kann das erfindungsgemässe Prüfsystem vorteilhaft zur Prüfung der Preforms zur Herstellung von Getränkeflaschen aus Kunststoff verwendet werden. In der nachfolgenden Beschreibung wird aus Gründen der Einfachheit immer von der Prüfung von Preforms gesprochen, ausser wenn an die Besonderheiten der Prüfung von anderen Werkstücken speziell hingewiesen wird. Allerdings ist selbstverständlich, dass sich die beschriebenen Elemente des erfindungsgemässen Prüfsystems und des erfindungsgemässen Prüfverfahrens gleichsam auf das Prüfen bzw. Zählen von allen anderen entsprechenden Werkstücken (z.B. Verschlüssen) beziehen.

Die in einer herkömmlichen Herstellungsmaschine bzw. in einem herkömmlichen Herstellungssystem produzierten Preforms 2 aus Kunststoff (z.B. aus PET) werden durch die Transporteinrichtung 3 bis zu einem Aufnahmegefäss 4 transportiert. Im Wesentlichen geschieht dieser Transport ungeordnet. Unter diesem Begriff soll eine Anordnung der Preforms verstanden werden, welche sich "natürlich" ergibt, d.h. ohne eine vorherige Ordnung bzw. Sortierung. Selbstverständlich ist es aber auch denkbar, dass die Preforms 2 während des Transports durch die Transporteinrichtung 3 auch geordnet werden, d.h. dass sie beim Verlassen der Transporteinrichtung 3 zum Beispiel eine vorbestimmte Ausrichtung aufweisen. Die vorliegende Erfindung enfaltet ihre Vorteile selbstverständlich auch in einem solchen Fall.

Ausserdem ist es denkbar, dass die Preforms 2 nach dem Verlassen der Transporteinrichtung 3 nicht an ein Aufnahmegefäss 4, sondern an eine weitere Transporteinrichtung übergeben werden. Dies ist nicht Teil der beanspruchten Erfindung. Allerdings funktioniert das weitere Verfahren auch in diesem Alternativfall auf dieselbe Weise. Die Transporteinrichtung 3 in den Figuren 1 und 2 ist ein herkömmliches Förderband mit einer Antriebsrolle 3a, welche über einen nicht dargestellten Antrieb angetrieben wird. Es ist jedoch selbstverständlich denkbar, anstelle eines Förderbandes auch eine andere geeignete Transporteinrichtung zu verwenden, beispielsweise ein Vakuumfördersystem oder eine Greifeinrichtung.

Nach Verlassen der Transporteinrichtung 3 gelangen die transportierten Preforms 2 in ein schematisch dargestelltes Aufnahmegefäss 4. Dabei kann das Aufnahmegefäss 4 eine simple Kartonkiste sein, welche nach dem Auffüllen durch das Bedienpersonal verschlossen und weggetragen wird, oder aber ein komplexer Aufnahmebehälter, welcher automatisch oder halbautomatisch zur Verpackung und Lagerung der Preforms 2 eingesetzt werden kann. Anstelle des Aufnahmebehälters 2 können ein weiteres Transportband, ein so genanntes Kühlband oder eine andere ähnliche Einrichtung vorgesehen werden. Dies wird insbesondere dann verwendet, wenn die geprüften Preforms 2 einer weiteren Kontrolle und/oder Behandlung unterzogen werden müssen.

Wie anhand der Figuren 1 und 2 gut gesehen werden kann, sind die Preforms 2 während des Transports auf der Transporteinrichtung 3 sowie während des Einführens in das Aufnahmegefäss 4 ungeordnet. Mit anderen Worten werden die Preforms 2 direkt aus der Herstellungsmaschine, ohne eine Ausrichtung oder ein Ordnen auf die Transporteinrichtung 3 gebracht und in diesem Zustand bis in das Aufnahmegefäss 4 transportiert. Wenn, wie oben bereits erwähnt, die Preforms 2 jedoch aus der Herstellungsmaschine in einer geordneten Weise herauskommen, kann es auch vorkommen, dass sie auf der Transporteinrichtung 3 ebenfalls in dieser geordneten Weise transportiert werden. Die vorliegende Erfindung würde klar auch bei einer solchen Situation einwandfrei funktionieren, ist aber keinesfalls auf eine solche Ausrichtung bzw. Ordnung angewiesen.

Auf der rechten Seite in Figur 1 bzw. in Figur 2 ist eine Aufnahmeeinrichtung 6 dargestellt. Dabei kann es sich beispielsweise um eine ganz herkömmliche digitale (oder auch analoge) Kamera handeln. Erfindungsgemäß ist die Aufnahmeeinrichtung 6 jedoch eine Vorrichtung, welche die Aufnahme der so genannten optischen Kohärenztomogrammen oder die Aufnahme der so genannten multispektralen Bilder ermöglicht. Eine solche Einrichtung (z.B. eine Multispektralkamera) wird erfindungsgemäß zur Prüfung der Beschaffenheit der Barriereschicht bei den Preforms verwendet **.**

Die optische Kohärenztomografie (englisch "Optical Coherence To-mography" oder OCT) ist ein Untersuchungsverfahren, bei dem Licht geringer Kohärenzlänge mit Hilfe eines Interferometers zur Entfernungsmessung streuender Materialien eingesetzt wird. Das Untersuchungsobjekt wird punktweise abgetastet. Spezifisch erlaubt diese OCT-Technologie, die Topographie einer Oberfläche und innere Strukturen sichtbar zu machen. Als Lichtquellen werden breitbandige Superlumineszenzdioden sowie Laserlichtquellen im nahinfraroten Wellenlängenbereich zwischen 600 und 1700 nm eingesetzt. Dabei wird in das zu prüfende Objekt kurzkohärentes Licht im genannten Wellenlängenbereich in eingestrahlt und das zurückgestreute Licht ausgewertet. Dank diesen Aufnahmen kann eine Volumeninformation (also eine tridimensionelle Information) errechnet werden, dank welcher beispielsweise auch auf die Dicke der Barriereschicht geschlossen werden kann.

Bei den multispektralen Bildern handelt es sich gewönlich um digitale Bilddaten, welche sich aus mehreren Spektralkanälen zusammensetzen. Spezifisch enthalten die multispektralen Bilder Informationen über reflektierte oder emittierte elektromagnetische Strahlung unterschiedlicher Wellenlängen. Zu diesem Zweck werden dieselben Aufnahmen also jeweils mit Reaktionen auf verschiedene Farben aufgenommen, woraus später ein eiheitliches Bild zusammengesetzt wird. Auch solche Multispektralbilder eignen sich unter anderem besonders gut zur Bestimmung der Dicke der Barriereschicht.

Ein Fachmann wird ohne weiteres andere Aufnahmeeinrichtungen kennen, welche anstelle der herkömmlichen digitalen Kamera bzw. anstelle einer Einrichtung zur Generierung von optischen Kohärenztomogrammen oder einer Multispektralkamera verwendet werden können. Dies ist jedoch nicht Gegenstand der Erfindung. Die Aufnahmeeinrichtung 6 ist mit einer Verarbeitungseinrichtung (nicht dargestellt) verbunden.

Die auf der Transporteinrichtung 3 im Allgemeinen ungeordnet transportierten Preforms 2 verlassen diese Transporteinrichtung 3 ebenfalls ungeordnet und fallen dann (durch die Einwirkung der Schwerekraft) in das Aufnahmegefäss 4 hinein. In diesem Augenblick, also genau zwischen dem Verlassen der Transporteinrichtung 3 und dem Hineinfallen in das Aufnahmegefäss 4 wird durch die Aufnahmeeinrichtung 6 jeweils eine Abbildung von den vorbeifallenden Preforms 2 gemacht und an die Verarbeitungseinrichtung zur Prüfung übermittelt. In Abhängigkeit von der Wahl der Aufnahmeeinrichtung 6 wird also grundsätzlich ein optisches Kohärenztomogramm oder ein multispektrales Bild aufgenommen. Auch Kombinationen von diesen verschiedenen Abbildungen sind auch denkbar. Denkbar ist es zudem auch, anstatt eine einzige Abbildung zu machen, eine Serie von mehreren Abbildungen zu tätigen, so dass jeweils die aufgenommene Abbildung zur Auswertung ausgesucht werden kann, in welcher zumindest eine representative Anzahl von aufgenommenen zu prüfenden Preforms 2 die optimale Position haben. Von dieser representativen Anzahl kann dann auf die Gesamtanzahl der Preforms geschlossen werden.

Anstelle bzw. zusätzlich zur Prüfung der Preforms kann auch deren Anzahl bestimmt werden. Dazu werden die aufgenommenen Abbidungen eben-falls durch die Auswertungseinheit ausgewertet, wobei dann andere Algorithmen verwendet werden. Auf diese Weise kann eine sehr präzise und einfache Zählung realisiert werden.

Hinter den fallenden Preforms 2 (von der Aufnahmeeinrichtung 6 aus gesehen) kann bei der in den Figuren 1 und 2 gezeigten ersten Ausführungsform eine Bildwand bzw. eine Schirmeinrichtung 5 vorgesehen werden, deren Funktion später erläutert wird. Allerdings ist es auch möglich, diese ersteh Aus-führungsform der vorliegenden Erfindung ohne die Bildwand 5 zu realisieren.

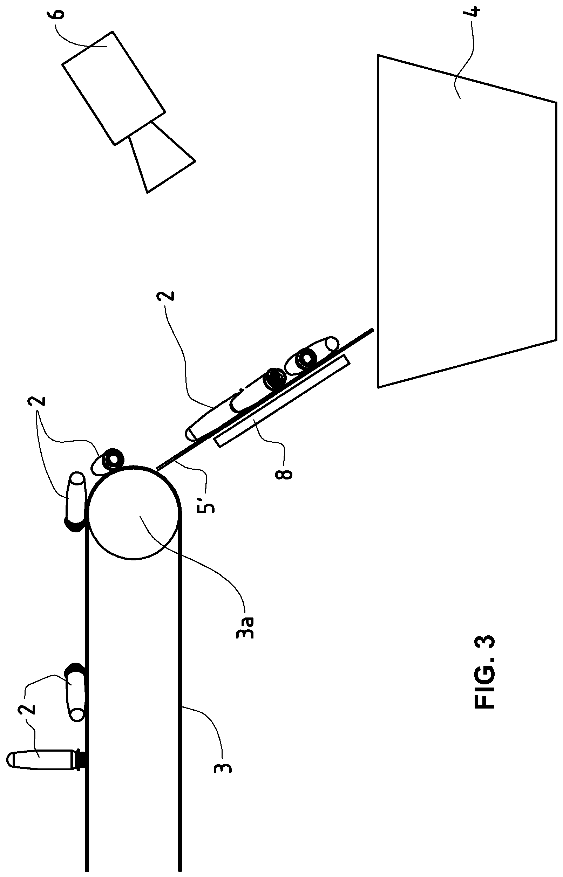

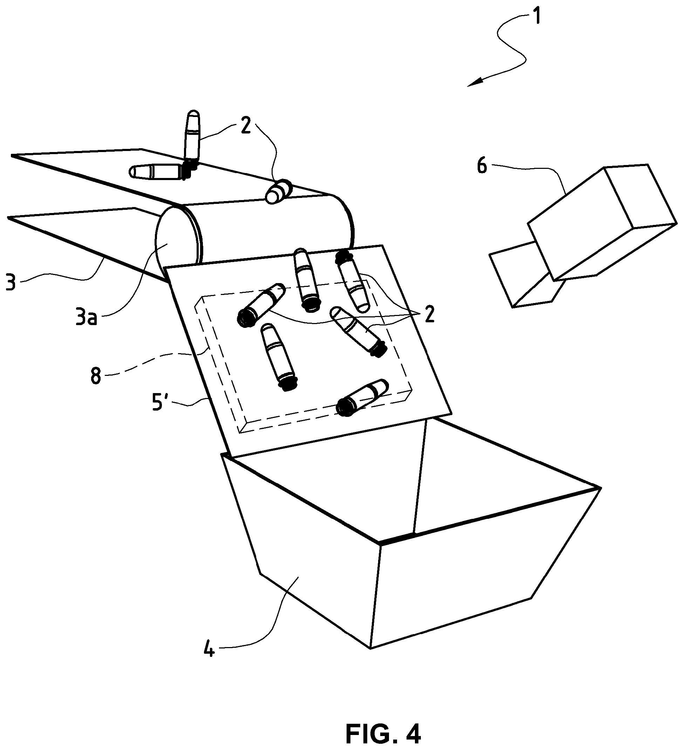

In Figur 3 und Figur 4 wird schematisch ein System 1 zur Prüfung der Preforms gemäss einer zweiten Ausführungsform der vorliegenden Erfindung illustriert. Gleiche Teile und Einrichtungen, die denjenigen der ersten Ausführungsform entsprechen und die gleiche Funktion haben werden mit gleichen Bezugszeigen beziffernt.

Die auf der Transporteinrichtung 3 grundsätzlich ungeordnet transportierten Preforms 2 verlassen diese Transporteinrichtung 3 ebenfalls ungeordnet und gelangen dann auf eine Platte 5', über welche sie (insbesondere durch die Einwirkung der Schwerekraft), rutschen können, um in das Aufnahmegefäss 4 eingeführt zu werden. Während des Rutschens auf der Platte 5' sind die Preforms 2 auch ungeordnet, liegen allerdings alle in der Ebene der Platte 5'. Während des Rutschens auf der Platte 5', also zwischen dem Verlassen der Transporteinrichtung 3 und dem Hineinfallen in das Aufnahmegefäss 4 wird durch die Aufnahmeeinrichtung 6 jeweils eine Abbildung (also ein Foto, ein optisches Kohärenztomogramm oder ein multispektrales Bild) von den vorbeifallenden Preforms 2 gemacht und an die Verarbeitungseinrichtung zur Prüfung übermittelt. Denkbar ist es auch, anstatt eine einzige Abbildung zu machen, eine Serie von mehreren Abbildungen zu tätigen, so dass jeweils die aufgenommene Abbildung zur Auswertung ausgesucht werden kann, in welcher die aufgenommenen zu prüfenden Preforms 2 die optimale Position haben.

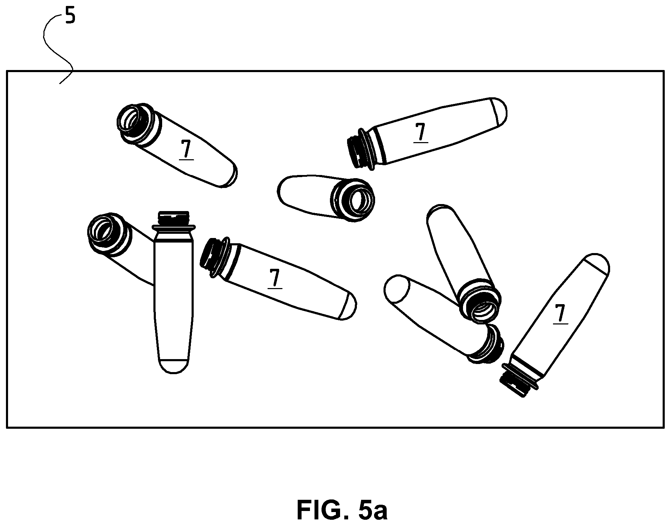

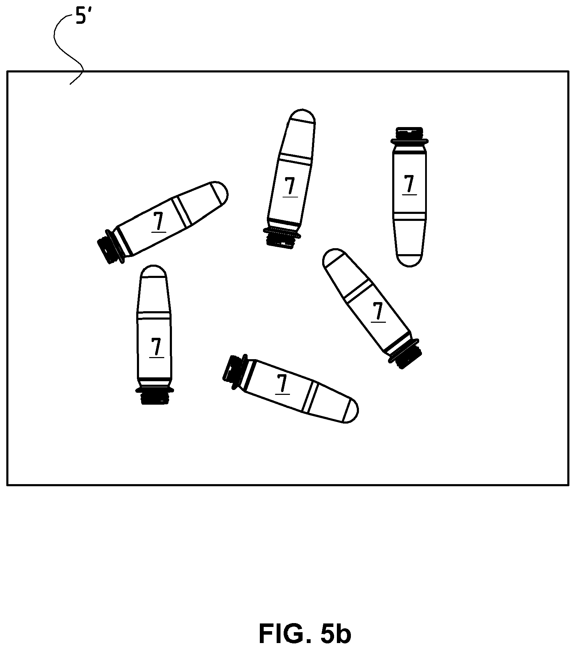

In den Figuren 5a und 5b wird rein schematisch eine Abbildung illustriert, dass mit einem System nach der ersten, bzw. zweiten Ausführungsform der Erfindung gemacht wurde. In dieser Abbildung können Abbildungen von mehreren Preforms identifiziert werden. Im Hintergrund der Abbildung kann in Figur 5a die Bildwand 5 und in Figur 5b die Platte 5' gesehen werden. In den Figuren 5a und 5b tragen die Abbildungen von Preforms die Referenznummer 7 (anstelle von 2), damit sie von den "echten" Preforms unterschieden werden können. Das heisst, die mit 7 bezifferten Preforms stellen solche Preforms dar, die für alle Preforms representativ sind. Die Preforms 7 liegen in einem Bereich vor der Bildwand 5, der geeignet ist, um Abbildungen zu erhalten, die zur Auswertung mit der Verarbeitungseinrichtung geeignet sind. Der Bereich wird z. B. durch einen Abstand zur Aufnahmeeinrichtung 6 definiert.

In dem beispielhaften Abbild nach Figur 5a kann gesehen werden, dass die Preforms 7 ungeordnet sind. In diesem Sinne ist die Abbildung von gewissen Preforms 7 unter Umständen unvollständig, da sie durch andere Preforms 7 ganz oder teilweise abgedeckt werden. Zudem kann man sehen, dass einige Preforms 7 in der gemachten Abbildung unter einem Winkel gegenüber der Bildwand 5 (bzw. gegenüber der Ebene, die zur Blickrichtung der Aufnahmeeinrichtung 6 senkrecht steht) stehen, womit nur ein Teil ihrer Oberfläche in der Abbildung gesehen werden kann. Im Extremfall ist es denkbar, dass sich ein Preform 7 beim freien Fall genau in der Blickrichtung der Aufnahmeeinrichtung 6 befindet. In dieser Situation würde man in der entsprechenden Abbildung lediglich die Aufnahme des Preform-Kopfes bzw. des Preform-Bodens sehen können.

Wie in Figur 5b gesehen werden kann, liegen im Falle einer Platte 5' alle Preforms 7 in derselben Ebene, d.h. in der Ebene der Platte 5', so dass sie sich gegenüber der Aufnahmeeinrichtung 6 immer unter einem optimalen Winkel befinden. Dadurch kann garantiert werden, dass eine grosse Anzahl von aufgenommenen Abbildungen der Preforms 7 zur Auswertung verwendet werden können.

Die Bildwand 5 kann aus unterschiedlichen Materialen bestehen, beispielsweise aus Kunststoff oder aus Textil. Die Platte 5' kann ebenfalls aus vielen Materialen bestehen, beispielsweise aus Kunststoff, Glass oder Metall, und auch aus einer Kombination von Materialien.

Zur Befestigung bzw. korrekten Positionierung der Bildwand 5 oder Platte 5' können spezielle Befestigungsmittel vorgesehen werden (nicht dargestellt), zum Beispiel Gestelle oder Aufhängehaken. Insbesondere ist es möglich und vorteilhaft, solche Befestigungsmittel vorzusehen, mit welchen die Platte 5' direkt an die Transporteinrichtung 3 angebracht werden kann.

In Figuren 3 und 4 ist auch ein Beleuchtungskörper 8 hinter der Platte 5' sichtbar. Praktisch ist es, wenn der Beleuchtungskörper 8 so positioniert ist, dass die auf der Platte 5' rutschenden Preforms 2 durch den transparenten Bereich der Platte 5' ausgeleuchtet werden. Dank dem Beleuchtungskörper 8 können aber Preforms 1 auf jeden Fall in Bezug auf die Aufnahmeeinrichtung 6 von hinten ausgeleuchtet werden. Ein solcher Beleuchtungskörper 8 ist ebenfalls für eine Ausführungsform mit einer Bildwand 5 denkbar.

An dieser Stelle soll jedoch angemerkt werden, dass bei einem Prüfsystem zur Prüfung von Verschlüssen oder anderen opaken bzw. halbopaken (also nicht transparenten) Werkstücken und anderen Gegenständen ein Beleuchtungskörper (nicht illustriert) oberhalb der Platte 5' vorgesehen werden soll, damit die zu prüfenden Werkstücke auch von oben und nicht nur von unten ausgeleuchtet werden können. Selbstverständlich können auch mehrere solche Auflichter verwendet werden, und zudem ist es auch möglich, auf die Beleuchtung von hinten (d.h. den Beleuchtungskörper 8) teilweise oder ganz zu verzichten.

Die gemachten Abbildungen (ein optisches Kohärenztomogramm oder ein multispektrales Bild) werden von der Aufnahmeeinrichtung 6 an die Verarbeitungseinrichtung übermittelt. Durch diese Verarbeitungseinrichtung werden danach die Abbildungen zur Prüfung der Preforms ausgewertet.

Bei der Prüfung der Defekte in den Preforms (zum Beispiel bei der Prüfung von mangelhaften Dimensionen, Formen, Wanddicken, Präsenz von Nadellöchern, Verbrennungen, Fremdkörpern, Bläschen, zu langen Anspritzpunkten (so genannten Gates), usw.) werden in der jeweils ausgewerteten Abbildung zunächst ein oder mehrere Preforms 7 identifiziert, welche bei der Aufnahme der Abbildung so ausgerichtet waren, dass ihre ganze Länge in der Abbildung möglichst vollständig gesehen werden kann. Diese Preforms 7 können beispielsweise mit einer Referenzabbildung eines korrekten Preforms verglichen werden, um die Beschaffenheit des zu überprüfenden Preforms 7 in Bezug auf den gewünschten (bwz. die gewünschten) Parameter zu kontrollieren. Erfindungsgemäss werden also in der aufgenommenen Abbildung jeweils die im Bezug auf ihre Lage, Winkelposition, überlappende Teile, etc. korrekt liegenden Preforms automatisch detektiert, so dass sie jeweils mit einer Referenzabbildung verglichen werden können.

Im Fall der ersten Ausführungsform mit einer Bildwand 5 werden zum Beispiel diejenigen Preforms 7 identifiziert, welche beim freien Fall und der Aufnahme der Abbildung unter einem solchen Winkel gegenüber der Bildwand 5 ausgerichtet waren, dass ihre ganze Länge in der Abbildung möglichst vollständig gesehen werden kann. Konkret heisst das, dass diejenigen Preforms 7 zu identifizieren sind, deren Längsachse (im Augenblick der Aufnahme der Abbildung) möglichst parallel zur Bildwand 5 gelegen ist. In Figur 5a könnten beispielsweise die Preforms 7 ausgesucht werden, welche die Referenznummern tragen.

Im Fall der zweiten Ausführungsform mit einer Platte 5' werden z. B. diejenigen Preforms 7 identifiziert, welche von der Abbildung vollständig erfasst werden, dass heisst, welche vollständig im Bildbereich liegen und nicht von anderen Preforms überdeckt werden. Bei Abweichungen von der Referenzabbildung in Bezug auf einen oder mehrere Parameter könnte direkt auf Fehler in der Preform-Serie geschlossen werden. Anstelle von einer Referenzabbildung im engeren Sinne ist es aber auch denkbar, bestimmte charakteristische Referenzmesswerte zu verwenden, welche dann beim Vergleich mit den entsprechenden Messwerten bei den aufgenommenen zu prüfenden Preforms verglichen werden.

Dieses Verfahren erlaubt es unter Umständen nicht, alle Preforms 7 einer Prüfung zu unterziehen, da es statistisch gesehen auch solche Preforms 2 geben kann, welche beim Rutschen zwischen der Transporteinrichtung 3 und dem Aufnahmegefäss 4 so liegen, dass ihre Abbildung auf die beschriebene Weise nicht gut ausgewertet werden kann. Im Extremfall ist es zudem durchaus denkbar, dass keine einzige Abbildung von Preforms 2 in einer Aufnahme so ausgerichtet ist, dass ihre Auswertung durch die Verarbeitungseinrichtung möglich ist. Allerdings können diese Nachteile erstaunlicheweise dennoch in Kauf genommen werden, da festgestellt wurde, dass die gleichen Mängel oft in einer ganzen Serie (oder in einem Teil der Serie) vorkommen, so dass die Prüfung einer gewissen Anzahl in der Preforms 7 durchaus ausreichend ist, um relevante Schlüsse über die Qualität der gesamten Serie machen zu können. Insbesondere ist es auch wichtig anzumerken, dass auf diese Weise eine kontinuierliche Prüfung möglich ist, was im Vergleich zu einer probeweise durchgeführten Prüfung zu wesentlich genauren Resultaten führen. Ausserdem können nichtfehlerhafte Teile einer Serie mit dieser kontinuerlichen Prüfung detektiert werden, so dass nur fehlerhafte Teile ausgesondert werden müssen, was bei einer probeweise durchgeführten Prüfung nicht möglich ist.

In diesem Zusammenhang ist es durchaus denkbar, dass die Auswertung jeder Abbildung unmittelbar verwendet wird, um auf die Beschaffenheit einer ganzen Preform-Serie zu schliessen. Auf der anderen Seite ist es aber auch durchaus möglich, dass zuerst mehrere aufgenommene Abbildungen ausgewertet werden, bevor ein Schluss über die Beschaffenheit der gesamten Serie gemacht wird.

Erfindungsgemäss ist es zudem auch möglich, die Aufnahmeeinrichtung 6, die entsprechende Verarbeitungseinrichtung, die Bildwand 5, bzw. die Platte 5' und die entsprechenden Befestigungsmittel jeweils zusammen als ein Kit anzubieten. In diesem Fall könnten diese Elemente durch eine nicht spezifisch ausgebildete Person an einer herkömmlichen Herstellungsmaschine bzw. ein einem herkömmlichen Herstellungssystem für Preforms auf eine einfache Weise installiert und in Betrieb genommen werden. Dank dieser Möglichkeit müssten keine Anpassungen an der Herstellungsmaschine selbst durchgeführt werden.

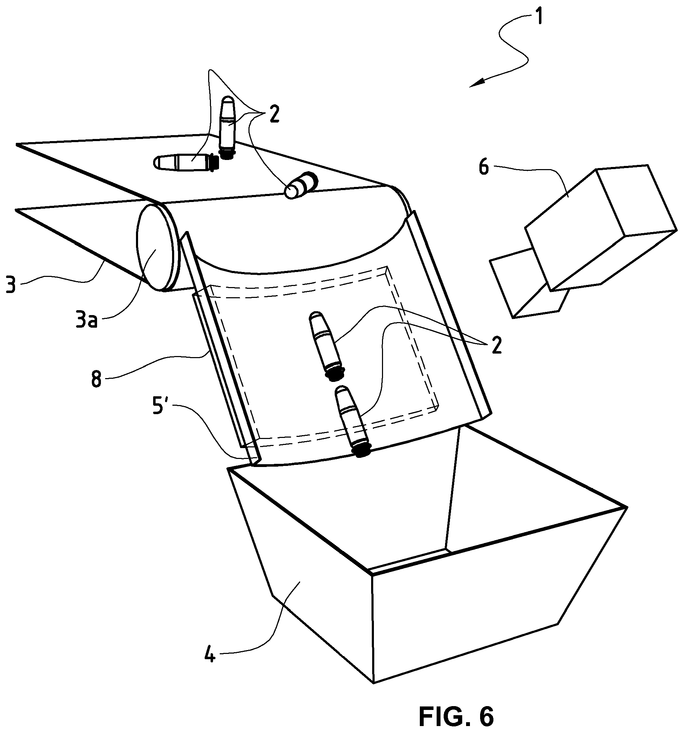

In Figuren 6 bis 9 werden eine zweite und eine dritte Variante des Systems gemäss der zweiten Ausführungsform der vorliegenden Erfindung gezeigt. Die Systeme gemäss diesen beiden Varianten der vorliegenden Erfindung unterscheiden sich vom System, das in den Figuren 3 und 4 illustriert ist, lediglich darin, dass die Platte 5', über welche die Preforms 2 nach dem Verlassen der Transporteinrichtung 3 und vor dem Eintritt in das Aufnahmegefäss 4 rutschen, nicht flach ausgebildet ist. Aus diesem Grund tragen die Elemente in den Figuren 6 bis 9 dieselben Bezugszeichen wie die Elemente in den Figuren 1 bis 4.

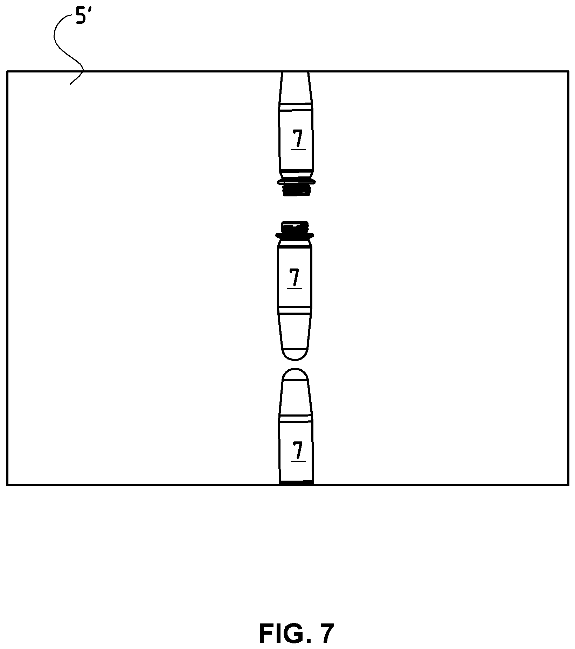

Konkret ist die Platte 5' im System gemäss der zweiten Variante der Erfindung (Figuren 6 und 7) so gekrümmt, dass sie kanal- bzw. trogförmig ausgebildet ist. Wie in Figur 6 sehr gut gesehen werden kann, hat die Platte 5' die Form, die es ermöglicht, dass sich grundsätzlich alle die von der Transporteinrichtung 3 kommenden Preforms 2 während dem Rutschen in der Mitte der Platte 5' ansammeln und die Platte 5' in der Mitte der unteren Kante verlassen. Auf diese Weise können die Position bzw. der Fokus der Aufnahmeeinrichtung 6 angepasst werden, so dass die Abbildungen der rutschenden Preforms 2 optimal gemacht werden können. Auch werden die rutschenden Preforms 2 dank der gekrümmten Form der Platte 5' teilweise sortiert, d.h. sie orientieren sich zwangsläufig so, dass sich ihre Längsachsen parallel zur Rutschrichtung angeordnen. Auch diese Tatsache trägt dazu bei, dass die Aufnahme der Abbildungen der zu prüfenden Preforms 2 und ihre Auswertung optimiert werden können. Obleich sind die Preforms derart ungeordnet, dass unterschiedliche Abstände bestehen können oder die Preforms mit einer Oberseite in gegenüberliegende Richtungen weisen.

Selbstverständlich ist es auch denkbar, dass die Krümmung der Platte anders angeordnet bzw. ausgebildet ist als dies in Figur 6 dargestellt ist. Ein Fachmann wird jedoch wissen, wie die Krümmung der Platte 5' an die besonderen Bedürfnisse angepasst werden kann.

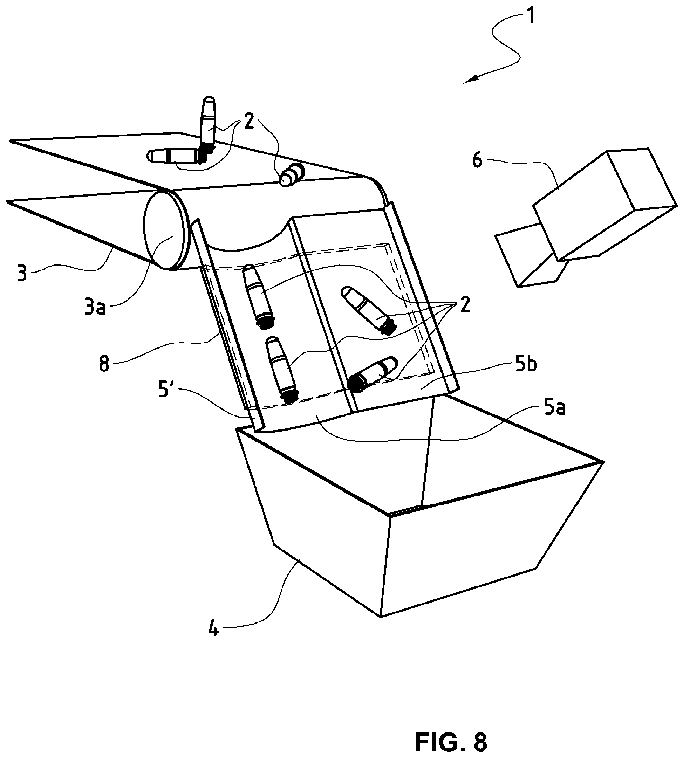

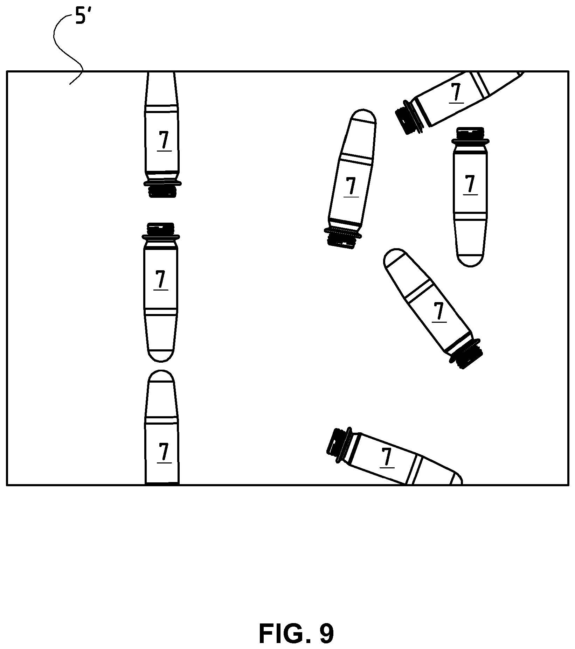

Insbesondere ist es auch denkbar, dass nicht die gesamte Platte 5' eine Krümmung aufweist. Eine solche Variante ist in den Figuren 8 und 9 dargestellt. Im Gegensatz zur Variante, die in Figuren 6 und 7 dargestellt ist, hat die Platte 5' in Figur 8 einen gekrümmten Bereich 5a und einen flachen Bereich 5b. Bei dieser Variante können die Vorteile der Systeme gemäss der ersten Ausführungsform (Figuren 1 und 2) und der zweiten Ausführungsform (Figuren 3 und 4) der vorliegenden Erfindung kombiniert werden. Bei dieser Variante ist es daher insbesondere vorteilhaft, dass zwei Aufnahmeeinrichtungen 6 vorgesehen werden, welche jeweils Abbildungen von Preforms 2 in einem der beiden Bereiche 5a und 5b der Platte 5' machen. Eine solche Doppelanordnung ist jedoch auch in den anderen Fällen möglich.

Zudem wäre es in einer nochmals anderen Ausführungsform **,** die jedoch nicht Teil der beanspruchten Erfindung ist, möglich, dass Abbildungen der Preforms 2 durch die Aufnahmeeinrichtung 6 nicht erst nach dem Verlassen der Transporteinrichtung 3 (also während sich die Preforms 2 im freien Fall befinden), sondern vorher, d.h. noch während des Transports der Preforms 2 auf der Transporteinrichtung 3) gemacht werden. Zu diesem Zweck kann die Aufnahmeeinrichtung 6 über der Transporteinrichtung 3 angeordnet werden, so dass sie auf die Oberseite der Transporteinrichtung 3 gerichtet ist. Abbildungen der auf der Transporteinrichtung 3 transportierten Preforms 2 können dann gemacht werden, indem die Transporteinrichtung 3 vollkommen oder teilweise transparent ausgestaltet ist, so dass eine genügende Ausleuchtung der Preforms 2 möglich ist. Die auf diese Weise aufgenommenen Abbildungen der Preforms 2 entsprechen im Wesentlichen den beim freien Fall mit oder ohne Bildwand 5 aufgenommenen Abbildungen oder den während des Rutschens auf der Platte 5' aufgenommenen Abbildungen, so dass die nachfolgende Auswertung auf dieselbe Weise durchgeführt werden kann.

An dieser Stelle soll noch angedeutet werden, dass die vorliegende Erfindung nicht auf die beschriebene Ausführungsform beschränkt ist. Einem Fachmann wird ohne weiteres klar sein, dass Weiterentwicklungen und Abänderungen im Rahmen der geschützten Erfindung ohne weiteres möglich sind. So können beispielsweise Systemelemente je nach Bedarf durch andere Elemente ausgetauscht werden, welche die gleichen (oder ähnlichen) Funktionen erfüllen. Ebenfalls können zusätzliche Einrichtungen und/oder Elemente vorgesehen werden, zum Beispiel können auch mehrere Bildaufnahmeeinheiten vorgesehen werden, dank welchen die zu prüfenden Preforms 2 von verschiedenen Seiten aufgenommen werden können. Solche Massnahmen und Anpassungen müssen jedoch in den Schutzbereich der Erfindung fallen, welcher durch die nachfolgenden Patentansprüche definiert wird.

## Patentansprüche

1. Prüfverfahren zur Prüfung von Werkstücken (2), welche aus einem Grundkörper bestehen, an welchem optional eine Barriereschicht mindestens teilweise aufgetragen ist und zur Herstellung von Behältern, insbesondere Getränkeflaschen, vorgesehen sind,
wobei die Werkstücke (2) durch eine Transporteinrichtung (3) in ein Aufnahmegefäss (4) transportiert werden, und wobei mittels einer Aufnahmeeinrichtung (6) eine Abbildung von den Werkstücken (2) gemacht und an eine Verarbeitungseinrichtung zur Prüfung übermittelt wird,
die Abbildung von den Werkstücken (6) zwischen dem Verlassen der Transporteinrichtung (3) und Einführen der Werkstücke (6) in das Aufnahmegefäss (4) gemacht wird,
die Abbildung ein optisches Kohärenztomogramm oder ein multispektrales Bild ist, und
wobei die Abbildung durch die Verarbeitungseinrichtung derart verarbeitet wird, dass die Beschaffenheit des Grundkörpers und die Beschaffenheit der optional mindestens teilweise auf den Grundkörper aufgetragenen Barriereschicht überprüft werden, um die fehlerhaften Werkstücke (2) zu entdecken, wobei die Beschaffenheit des Grundkörpers dessen Dimension, Form, Wanddicke und/oder Länge eines Anspritzpunkts umfasst und die Beschaffenheit der Barriereschicht die Dicke der Barriereschicht umfasst.

2. Prüfverfahren nach Anspruch 1, **dadurch gekennzeichnet, dass** die Abbildung der Werkstücke (2) vor einer Bildwand (5) oder einer Platte (5') gemacht wird.

3. Prüfverfahren nach einem der vorhergehenden Ansprüche,
**dadurch gekennzeichnet, dass** die Werkstücke (2) nach dem Verlassen der Transporteinrichtung (3) in das Aufnahmegefäss (4) im freien Fall eingeführt werden oder über die Platte (5') derart rutschen, dass sie in das Aufnahmegefäss (4) eingeführt werden.

4. Prüfverfahren nach einem der vorhergehenden Ansprüche,
**dadurch gekennzeichnet, dass** mehrere Abbildungen ausgewertet werden, um auf eine fehlerhafte Serie von Werkstücken (2) zu schliessen.

5. Prüfverfahren nach einem der vorhergehenden Ansprüche,
**dadurch gekennzeichnet, dass** die Werkstücke (2) beim Erstellen der Abbildung durch mindestens einen Beleuchtungskörper (8) ausgeleuchtet werden, und dass der mindestens eine Beleuchtungskörper derart positioniert wird, dass die Werkstücke (2) im Bezug auf die Aufnahmeeinrichtung (6) von hinten oder von oben ausgeleuchtet werden.

6. Prüfverfahren nach Anspruch 2, **dadurch gekennzeichnet, dass** mindestens ein Teilbereich der Platte (5) in mindestens einer Richtung gekrümmt ist.

7. Prüfverfahren nach dem vorhergehenden Anspruch, **dadurch gekennzeichnet, dass** die Platte (5') derart gekrümmt ist, dass in der Platte (5') mindestens ein Kanal für die rutschenden Werkstücke (2) ausgebildet ist.

8. Prüfverfahren nach einem der vohergehenden Ansprüche, **dadurch gekennzeichnet, dass** das Werkstück (2) eine Preform oder ein Verschluss ist.

9. Prüfsystem zur Prüfung von Werkstücken (2), welche aus einem Grundkörper bestehen, an welchem optional eine Barriereschicht mindestens teilweise aufgetragen ist und zur Herstellung von Behältern, insbesondere Getränkeflaschen, vorgesehen sind,
umfassend eine Transporteinrichtung (3) zum Transportieren von Werkstücken (2) in ein Aufnahmegefäss (4), eine Verarbeitungseinrichtung zur Prüfung und eine Aufnahmeeinrichtung (6) zum Erstellen einer Abbildung von den Werkstücken (2) und zum Übermitteln dieser Abbildung an die Verarbeitungseinrichtung zur Prüfung,
wobei die Abbildung von den Werkstücken (6) zwischen dem Verlassen der Transporteinrichtung (3) und Einführen der Werkstücke (6) in das Aufnahmegefäss (4) gemacht wird,
die Abbildung ein optisches Kohärenztomogramm oder ein multispektrales Bild ist, und
die Verarbeitungseinrichtung dazu eingerichtet ist, dass die Abbildung durch die Verarbeitungseinrichtung derart verarbeitet wird, dass die Beschaffenheit des Grundkörpers und die Beschaffenheit der optional mindestens teilweise auf den Grundkörper aufgetragenen Barriereschicht der Werkstücke (2) überprüft werden, um die fehlerhaften Werkstücke (2) zu entdecken, wobei die Beschaffenheit des Grundkörpers dessen Dimension, Form, Wanddicke und/oder Länge eines Anspritzpunkts umfasst und die Beschaffenheit der Barriereschicht die Dicke der Barriereschicht umfasst.

10. Prüfsystem nach Anspruch 9, **dadurch gekennzeichnet, dass** eine Bildwand (5) oder eine Platte (5') vorgesehen sind, so dass die Abbildung der Werkstücke (2) vor der Bildwand (5) machbar ist.

11. Prüfsystem nach Anspruch 10, **dadurch gekennzeichnet, dass** Werkstücke (2) nach dem Verlassen der Transporteinrichtung (3) über die Platte (5') derart rutschen können, dass sie in das Aufnahmegefäss (4) einführbar sind.

12. Prüfsystem nach einem der Ansprüche 9 bis 11, **dadurch gekennzeichnet, dass** ein Beleuchtungskörper (8) vorgesehen ist, mittels welchem die Werkstücke (2) beim Erstellen der Abbildung ausleuchtbar sind, wobei der mindestens eine Beleuchtungskörper (8) derart positioniert ist, dass die Werkstücke (2) im Bezug auf die Aufnahmeeinrichtung (6) von hinten oder von oben ausleuchtbar sind.

13. Prüfsystem nach einem der Ansprüche 9 bis 12, **dadurch gekennzeichnet, dass** mindestens ein Teilbereich der Platte (5') in mindestens einer Richtung gekrümmt ist.

14. Prüfsystem nach Anspruch 13, **dadurch gekennzeichnet, dass** die Platte (5) derart gekrümmt ist, dass in der Platte (5') mindestens ein Kanal für die rutschenden Werkstücke (2) ausgebildet ist.

15. Prüfsystem nach einem der Ansprüche 9 bis 14, **dadurch gekennzeichnet, dass** das Werkstück (2) eine Preform oder ein Verschluss ist.

## Claims

1. Testing method for testing workpieces (2) consisting of a basic body, to which a barrier layer is optionally applied at least partially, and which are intended for the manufacture of containers, in particular beverage bottles,
whereby the workpieces (2) are transported into a receiving vessel (4) by means of a transport device (3), and whereby an image of the workpieces (2) is generated by means of a capturing device (6) and is transmitted to a processing device for testing,
the image of the workpieces (6) is taken between the workpieces leaving the transport device (3) and being introduced into the receiving vessel (4),
the image is an optical coherence tomography image or a multispectral image, and
whereby the image is processed by the processing device in such a way that the quality of the basic body and the quality of the optionally at least partially applied barrier layer on the workpieces (2) are tested in order to detect defective workpieces (2)
whereby the quality of the basic body comprises its dimensions, shape, wall thickness and/or length of an injection point, and the quality of the barrier layer comprises the thickness of the barrier layer.

2. Testing method according to claim 1, **characterized in that** the imaging of the workpieces (2) is carried out in front of a projection screen (5) or a plate (5').

3. Testing method according to one of the preceding claims, **characterized in that** after leaving the transport device (3) the workpieces (2) are led into the receiving vessel (4) in free fall or slide over the plate (5') in such a way that they are introduced into the receiving vessel (4).

4. Testing method according to one of the preceding claims, **characterized in that** a plurality of images are evaluated in order to draw conclusions about a defective series of workpieces (2).

5. Testing method according to one of the preceding claims, **characterized in that** when making the image the workpieces (2) are illuminated by at least one illuminating body (8), and **in that** the at least one illuminating body is positioned in such a way that the workpieces (2) are illuminated from the rear or from above in relation to the capturing device (6).

6. Testing method according to claim 2, **characterized in that** at least one portion of the plate (5) <sic. 5')> is curved in at least one direction.

7. Testing method according to the preceding claim, **characterized in that** the plate (5') is curved in such a way that at least one channel for the sliding workpieces (2) is formed in the plate (5').

8. Testing method according to one of the preceding claims, **characterized in that** the workpiece (2) is a preform or a cap.

9. Testing system for testing of workpieces (2), which consist of a basic body, to which a barrier layer is optionally applied at least partially, and are intended for the manufacture of containers, in particular beverage bottles,
comprising a transport device (3) for transporting of workpieces (2) into a receiving vessel (4), a processing device for testing and a capturing device (6) for making an image of the workpieces (2) and transmitting this image to the processing device for testing,
whereby the imaging of the workpieces (6) is performed between the workpieces leaving the transport device (3) and being introduced into the receiving vessel (4),
the image is an optical coherence tomography image or a multispectral image, and
the processing device is moreover designed such that the image is processed by the processing device in such a way that the quality of the basic body and the quality of the barrier layer optionally applied at least partially to the basic body of the workpieces (2) are checked in order to detect the defective workpieces (2), whereby the quality of the basic body comprises its dimensions, shape, wall thickness and/or length of an injection point, and the quality of the barrier layer comprises the thickness of the barrier layer.

10. Testing system according to claim 9, **characterized in that** an projection screen (5) or a plate (5') is provided so that the imaging of the workpieces (2) in front of the projection screen (5) is feasible.

11. Testing system according to claim 10, **characterized in that** after leaving the transport device (3) workpieces (2) are able to slide over the plate (5') in such a way that they are able to be introduced into the receiving vessel (4).

12. Testing system according to one of the claims 9 to 11, **characterized in that** an illuminating body (8) is provided, by means of which the workpieces (2) are able to be illuminated during creation of the image, whereby the at least one illuminating body (8) is positioned in such a way that the workpieces (2) are able to be illuminated from behind or from above in relation to the capturing device (6).

13. Testing system according to one of the claims 9 to 12, **characterized in that** at least a portion of the plate (5') is curved in at least one direction.

14. Testing system according to claim 13, **characterized in that** the plate (5) is curved in such a way that at least one channel for the sliding workpieces (2) is formed in the plate (5').

15. Testing system according to one of the claims 9 to 14, **characterized in that** the workpiece (2) is a preform or a cap.

## Revendications

1. Procédé de vérification de pièces (2) constituées d'un corps de base, sur lequel une couche barrière est éventuellement appliquée au moins partiellement, et qui sont destinées à la fabrication de récipients, en particulier de bouteilles de boissons,
les pièces (2) étant transportées dans un récipient de réception (4) au moyen d'un dispositif de transport (3), et une image des pièces (2) est générée au moyen d'un dispositif de capture (6) et transmise à un dispositif de traitement pour être contrôlée,
l'image des pièces (6) est prise entre le moment où les pièces quittent le dispositif de transport (3) et celui où elles sont introduites dans le récipient de réception (4),
l'image est une image de tomographie par cohérence optique ou une image multispectrale, et
l'image étant traitée par le dispositif de traitement de manière à ce que la qualité du corps de base et la qualité de la couche barrière éventuellement appliquée au moins partiellement sur les pièces (2) soient testées afin de détecter les pièces (2) défectueuses,
la qualité du corps de base comprenant ses dimensions, sa forme, l'épaisseur de sa paroi et/ou la longueur d'un point d'injection, et la qualité de la couche barrière comprenant l'épaisseur de la couche barrière.

2. Procédé de vérification selon la revendication 1, **caractérisé en ce que** l'image des pièces (2) est projetée sur un écran de projection (5) ou sur une plaque (5').

3. Procédé de vérification selon l'une des revendications précédentes, **caractérisé en ce qu'**après avoir quitté le dispositif de transport (3), les pièces (2) sont amenées dans le récipient de réception (4) en chute libre ou glissent sur la plaque (5') de manière à être introduites dans le récipient de réception (4).

4. Procédé de vérification selon l'une des revendications précédentes, **caractérisé en ce qu'**une pluralité d'images sont évaluées afin de tirer des conclusions sur une série de pièces défectueuses (2).

5. Procédé de vérification selon l'une des revendications précédentes, **caractérisé en ce que**, lors de la réalisation de l'image, les pièces (2) sont éclairées par au moins un corps lumineux (8) et **en ce que** ledit au moins un corps lumineux est positionné de telle sorte que les pièces (2) soient éclairées par l'arrière ou par le haut par rapport au dispositif de capture (6).

6. Procédé de vérification selon la revendication 2, **caractérisé en ce qu'**au moins une partie de la plaque (5') est recourbée selon au moins une direction.

7. Procédé de vérification selon la revendication précédente, **caractérisé en ce que** la plaque (5') est courbée de telle manière qu'au moins un canal pour les pièces à usiner coulissantes (2) est formé dans la plaque (5').

8. Procédé de vérification selon l'une des revendications précédentes, **caractérisé en ce que** la pièce à usiner (2) est une préforme ou un bouchon.

9. Système de vérification pour contrôler des pièces (2) qui sont constituées d'un corps de base sur lequel une couche barrière est éventuellement appliquée au moins partiellement et qui sont destinées à la fabrication de récipients, en particulier de bouteilles de boissons,
comprenant un dispositif de transport (3) pour transporter les pièces (2) dans un récipient de réception (4), un dispositif de traitement pour le contrôle et un dispositif de capture (6) pour réaliser une image des pièces (2) et transmettre cette image au dispositif de traitement pour le contrôle,
l'imagerie des pièces (6) étant réalisée entre le moment où les pièces quittent le dispositif de transport (3) et celui où elles sont introduites dans le récipient de réception (4),
l'image étant une image de tomographie par cohérence optique ou une image multispectrale, et
le dispositif de traitement est conçu de plus de telle sorte que l'image soit traitée par le dispositif de traitement de manière à ce que la qualité du corps de base et la qualité de la couche barrière éventuellement appliquée au moins partiellement sur le corps de base des pièces (2) soient contrôlées afin de détecter les pièces défectueuses (2), la qualité du corps de base comprenant ses dimensions, sa forme, l'épaisseur de paroi et/ou la longueur d'un point d'injection, et la qualité de la couche barrière comprenant l'épaisseur de la couche barrière.

10. Système de vérification selon la revendication 9, **caractérisé en ce qu'**un écran de projection (5) ou une plaque (5') est prévu(e) de manière à permettre la visualisation des pièces (2) sur l'écran de projection (5).

11. Système de vérification selon la revendication 10, **caractérisé en ce qu'**après avoir quitté le dispositif de transport (3), les pièces (2) peuvent glisser sur la plaque (5') de manière à pouvoir être introduites dans le récipient de réception (4).

12. Système de vérification selon l'une des revendications 9 à 11, **caractérisé en ce qu'**un corps lumineux (8) est prévu, au moyen duquel les pièces (2) peuvent être éclairées pendant la création de l'image, le ou les corps lumineux (8) étant positionnés de telle sorte que les pièces (2) puissent être éclairées par l'arrière ou par le haut par rapport au dispositif de capture (6).

13. Système de vérification selon l'une des revendications 9 à 12, **caractérisé en ce qu'**au moins une partie de la plaque (5') est incurvée dans au moins une direction.

14. Système de vérification selon la revendication 13, **caractérisé en ce que** la plaque (5) est courbée de telle manière qu'au moins un canal pour les pièces à usiner coulissantes (2) est formé dans la plaque (5').

15. Système de vérification selon l'une des revendications 9 à 14, **caractérisé en ce que** la pièce à usiner (2) est une préforme ou un bouchon.
